# EUROPÄISCHE PATENTSCHRIFT

(11) **EP 2 152 801 B1**
(45) Veröffentlichungstag und Bekanntmachung des Hinweises auf die Patenterteilung: **05.06.2013**
(21) Anmeldenummer: 08716819.1
(22) Anmeldetag: 13.02.2008
(51) Int. Cl.: C08L 23/00, C10M 107/00, C08F 255/00, C08J 3/09, C10M 161/00, C10M 167/00, C08L 15/00, C08L 23/16, C08L 51/06, C08L 53/00

(54) **VERBESSERTE POLYMERDISPERSIONEN**
IMPROVED POLYMER DISPERSIONS
DISPERSIONS POLYMÈRES AMÉLIORÉES

(30) Priorität: 31.05.2007 DE 102007025604
(43) Veröffentlichungstag der Anmeldung: 17.02.2010
(60) Teilanmeldung: 12163834.0
(73) Patentinhaber: Evonik Oil Additives GmbH, 64293 Darmstadt (DE)
(72) Erfinder: SCHIMMEL, Thomas, 64291 Darmstadt (DE); TSCHEPAT, Wolfgang, 64291 Darmstadt (DE); FENGLER, Stephan, 65931 Frankfurt (DE)
(86) Internationale Anmeldenummer: PCT/EP2008/051697
(87) Internationale Veröffentlichungsnummer: WO 2008/145414

(56) Entgegenhaltungen:
- EP-A- 0 088 904
- EP-A- 0 090 168
- WO-A-2004/037954
- WO-A-2004/037955
- WO-A-2004/037956
- WO-A-2005/097855

## Beschreibung

Die vorliegende Erfindung betrifft verbesserte Polymerdispersionen, Verfahren zur Herstellung dieser Dispersionen und deren Verwendung.

Zur Verbesserung des Viskositätsindexes von Motorenölen können unter anderem Polyolefine eingesetzt werden. Typische Zusatzraten in Motorenölen betragen je nach Verdickungswirkung der Polymere etwa 0,5 - 6 Gew.-%. Besonders preisgünstige Viskositätsindexverbesserer stellen Olefincopolymere (OCP), die vorwiegend aus Ethylen- und Propylen aufgebaut sind, oder hydrierte Block-Copolymere (HSD) aus Dienen und Styrol dar.

Der ausgezeichneten Verdickungswirkung dieser Polymertypen steht eine mühsame Verarbeitbarkeit bei der Herstellung von Schmierölformulierungen gegenüber. Insbesondere die schlechte Löslichkeit in den Ölen, die den Formulierungen zugrunde liegen, bereitet Schwierigkeiten. Im Falle der Benutzung fester, nicht vorgelöster Polymere kommt es somit zu langen Einrührperioden, wobei man auf die Benutzung spezieller Rühr- und/oder Vormahlwerke angewiesen ist.

Setzt man konzentrierte, in Öl bereits vorgelöste Polymere als übliche Handelsformen ein, so ist lediglich eine 10-15%-ige Lieferform der OCP's bzw. HSD's realisierbar. Höhere Konzentrationen gehen mit zu hohen aktuellen Viskositäten der Lösungen einher (> 15,000 mm²/s bei Raumtemperatur) und sind daher quasi nicht mehr handhabbar. Insbesondere mit diesem Hintergrund wurden hochkonzentrierte Dispersionen von Olefincopolymeren und hydrierten Dien/Styrol-Copolymeren entwickelt.

Die beschriebene Dispersionstechnologie erlaubt die Herstellung von Polymerlösungen mit mehr als 20% OCP- bzw. HSD-Gehalt bei Viskositäten, die eine bequeme Einarbeitung in Schmierölformulierungen erlauben. Grundsätzlich beinhaltet die Synthese solcher Systeme den Einsatz eines sog. Emulgators bzw. einer Dispergierkomponente. Gebräuchliche Dispergierkomponenten sind unter anderem OCP- bzw. HSD-Polymere, auf die zumeist Alkylmethacrylate bzw. Alkylmethacrylat/Styrol-Gemische gepfropft wurden. Darüber hinaus sind Dispersionen bekannt, bei denen ein Lösemittel eingesetzt wird, welches den Methacrylatbestandteil der Dispersion besser und den OCP- bzw. HSD-Anteil schlechter löst. Ein solches Lösemittel zusammen mit dem Methacrylatanteil des Produktes bildet den Hauptbestandteil der kontinuierlichen Phase der Dispersion. Der OCP- bzw. HSD-Anteil stellt formell gesehen den Hauptbestandteil der diskontinuierlichen oder dispersen Phase dar.

Als Stand der Technik werden unter anderem die folgenden Dokumente angesehen:
US 4,149,984
EP-A-0 008 327
DE 32 07 291
DE 32 07 292
US 5,130,359
WO 2004/037954
WO 2004/037955
WO 2004/037956

US 4,149,984 beschreibt ein Verfahren zur Herstellung von Schmierölzusätzen durch Verbesserung der Kompatibilität zwischen Polyalkylmethacrylaten, im folgenden PAMA genannt, und Polyolefinen. Der Gewichtsanteil des PAMA's beträgt 50-80 Gew.%, der des Polyolefins 20-50%. Gesamtpolymergehalt der Dispersion ist 20-55%. Die Verwendung dispergierender Monomere wie N-Vinylpyrrolidon zur Pfropfung ist ebenso erwähnt. Vor dieser Anmeldung war bekannt, dass Methacrylate durch Pfropfung auf ein Polyolefin aufpolymerisiert werden können (DT-AS 1 235 491).

EP-A-0 008 327 schützt ein Verfahren zur Herstellung von Schmieröladditiven auf Basis eines hydrierten Blockcopolymerisats aus konjugierten Dienen und Styrol, wobei in erster Stufe Styrol und Alkylmethacrylate oder ausschließlich Alkylmethacrylate auf das hydrierte Blockcopolymer aufgepfropft werden und in zweiter Stufe eine zusätzliche Pfropfstufe (z.B. N-Vinylpyrrolidon) aufgebaut wird. Der Anteil des hydrierten Blockcopolymerisats am Gesamtpolymergehalt beträgt 5-55 Gew.%, der der ersten aus PAMA/Styrol bestehenden Pfropfstufe 49,5-85 % sowie der zweiten Pfropfstufe 0,5-10%.

Das Dokument DE 32 07 291 beschreibt Verfahren, welche einen erhöhten O-lefincopolymereintrag ermöglichen. Der Olefincopolymergehalt soll 20-65% in Relation zum Gesamtgewicht der Dispersion betragen. Gegenstand der Erfindung ist, dass durch Einsatz geeigneter Lösemittel, welche Olefincopolymere schlecht und PAMA-haltige Komponenten gut lösen, höher konzentrierte Dispersionen erhalten werden. DE 32 07 291 ist als Verfahrenspatent zu verstehen, welches insbesondere die Herstellung der Dispersionen beschreibt.

DE 32 07 292 entspricht im wesentlichen DE 32 07 291, ist aber eher als Schutz bestimmter Copolymerzusammensetzungen zu verstehen. Diese Zusammensetzungen werden nach analogem Verfahren hergestellt wie in DE 32 07 291 beschrieben.

Die Patentschrift US 5,130,359 betrifft Polymerdispersionen, die ein Polyolefin, eine Dispergierkomponente und eine organische Flüssigkeit umfassen, wobei die Löslichkeit des Polyolefins in der organischen Flüssigkeit höchstens 10% beträgt. Zu den geeigneten organischen Flüssigkeiten gehören insbesondere Ester, wobei auch Glycerin als Alkoholkomponente des Esters genannt wird. Allerdings werden keine Beispiele von Glycerinestern dargelegt. Zu den zur Herstellung der Ester geeigneten Säuren zählen insbesondere kurzkettige Carbonsäuren. Ester von langkettigen ungesättigten Carbonsäuren werden in US 5,130,359 nicht dargelegt. Darüber hinaus kann die Dispersion gemäß US 5,130,359 Mineralöl als optionale Komponente enthalten, wobei der Anteil jedoch so gering sein muss, dass der zuvor dargelegte Löslichkeitsgrenzwert nicht überschritten wird. Zur Herstellung der Dispersionen werden im Allgemeinen Lösungen des Polyolefins eingesetzt, wobei das Lösungsmittel während des Dispergierens abdestilliert wird. Hierdurch wird zur Herstellung der Dispersion relativ viel Energie benötigt.

Die Druckschrift WO 2004/037954 offenbart Polymerdispersionen, die neben einem Polyolefin, einer Dispergierkomponenten und einem Trägermedium zusätzlich eine Verbindung mit einer Dielektrizitätskonstanten größer oder gleich 9 enthalten. Hierdurch kann eine Verbesserung der Viskosität erzielt werden, wodurch sich der Anteil an Polyolefin steigern lässt. Die Verwendung von langkettigen Carbonsäureestern des Glycerins wird in diesem Dokument nicht beschrieben.

Darüber hinaus beschreibt das Dokument WO 2004/037955 Polymerdispersionen, die neben einem Polyolefin, einer Dispergierkomponenten zusätzlich eine Mischung aufweisen, die Mineralöl und mindestens eine (Oligo)oxyalkyl-Gruppen umfassende Verbindung enthält. Zu den (Oligo)oxyalkyl-Gruppen umfassenden Verbindungen gehören insbesondere Ester, die beispielsweise von Mono- und Dicarbonsäuren abgeleitet sein können. Diese Ester enthalten als Alkoholrest vorzugsweise Diole oder Polyalkylenglycole. Derartige Dispersionen zeigen eine besonders hohe Stabilität bei hohen Temperaturen. Die Verwendung von langkettigen Carbonsäureestern des Glycerins wird in diesem Dokument nicht beschrieben.

Weiterhin stellt das Dokument WO 2004/037956 Polymerdispersionen dar, die ein Polyolefin, eine Dispergierkomponente, einen Ester und einen (Oligo)oxyalkyl-Gruppen umfassenden Ether enthalten, wobei das Verhältnis von Ester zu Ether im Bereich von 30:1 bis 1:30 liegt. Die Verwendung von langkettigen Carbonsäureestern des Glycerins wird in diesem Dokument nicht beschrieben. Die in dieser Druckschrift beschriebenen Dispersionen zeigen ebenfalls eine besonders hohe Stabilität bei hohen Temperaturen.

Die im Stand der Technik beschriebenen Polymerdispersionen zeigen bereits ein gutes Eigenschaftsprofil. Verbesserungswürdig sind jedoch insbesondere deren Tieftemperatureigenschaften. So zeigen die zuvor dargelegten Dispersionen vielfach Trübungen, falls diese bei Temperaturen unterhalb von 10°C gelagert werden. Diese Trübungen sind zwar vielfach reversibel; jedoch kann hierdurch die Notwendigkeit entstehen, die Dispersion unter Energieaufwand zu erhitzen.

Darüber hinaus zeigen einige Dispersionen eine relativ hohe Viskosität bei einem hohen Anteil an Polyolefin. Gemäß WO 2004/037954 kann diese Viskosität durch Zugabe von polaren Substanzen verringert werden. Allerdings zeigen diese Dispersionen vielfach einen Anstieg der Viskosität bei einem Abkühlen der Dispersion, wie dies insbesondere die in WO 2004/037954 dargelegten Beispiele belegen.

Des Weiteren ist es notwendig die zuvor dargelegten Dispersionen bei sehr hohen Temperaturen herzustellen, wobei vielfach sehr lange Dispergierzeiten notwendig sind. Daher ist die Herstellung der bekannten Dispersionen relativ teuer. Alternativ kann gemäß dem Stand der Technik mit sehr hohen Rührleistungen gearbeitet werden. Dementsprechend war es eine Aufgabe der vorliegenden Erfindung Dispersionen bereitzustellen, die mit einem besonders geringen Energiebedarf, insbesondere bei relativ geringen Temperaturen und kurzen Dispersionszeiten erhalten werden können.

Darüber hinaus war es eine Aufgabe der vorliegenden Erfindung Polymerdispersionen mit einer geringen Viskosität bei hohem Polyolefingehalt zur Verfügung zu stellen. Je höher der Gehalt an OCP oder HSD, desto höher im Allgemeinen die Viskosität der Dispersion. Andererseits ist ein hoher Gehalt an diesen Polymeren wünschenswert, um die Transportkosten zu senken. Hierbei ist zu bedenken, dass eine geringere Viskosität eine einfachere und schnellere Zumischung der Viskositätsindexverbesserer in das Grundöl erlaubt. Daher sollten Polymerdispersionen zur Verfügung gestellt werden, die eine besonders geringe Viskosität aufweisen.

Darüber hinaus sind die Verfahren zur Herstellung der zuvor genannten Polymerdispersionen relativ schwierig zu beherrschen, so dass bestimmte Spezifikationen nur sehr schwer eingehalten werden können. Dementsprechend sollten Polymerdispersionen geschaffen werden, deren Viskosität leicht auf vorgegebene Werte eingestellt werden kann.

Eine weitere Aufgabe bestand darin, Polymerdispersionen anzugeben, welche einen hohen Gehalt an Polyolefinen, insbesondere an Olefincopolymeren und/oder an hydrierten Blockcopolymeren aufweisen.

Des Weiteren sollten die Polymerdispersionen einfach und kostengünstig hergestellt werden können, wobei insbesondere kommerziell erhältliche Komponenten eingesetzt werden sollten. Hierbei sollte die Produktion großtechnisch erfolgen können, ohne dass hierzu neue oder konstruktiv aufwendige Anlagen benötigt werden.

Gelöst werden diese sowie weitere nicht explizit genannten Aufgaben, die jedoch aus den hierin einleitend diskutierten Zusammenhängen ohne weiteres ableitbar oder erschließbar sind, durch Polymerdispersionen mit allen Merkmalen des Patentanspruchs 1. Zweckmäßige Abwandlungen der erfindungsgemäßen Polymerdispersionen werden in den auf Anspruch 1 rückbezogenen Unteransprüchen unter Schutz gestellt. Hinsichtlich des Verfahrens zur Herstellung von Polymerdispersionen liefert Anspruch 30 eine Lösung der zugrunde liegenden Aufgabe, während Anspruch 35 eine bevorzugte Verwendung einer Polymerdispersionen der vorliegenden Erfindung schützt.

Dadurch, dass Polymer-Dispersionen
A) mindestens ein dispergiertes Polyolefin, umfassend ein oder mehrere Olefincopolymere, hydriertes Polyisopren, hydrierte Copolymere aus Butadien/Isopren oder hydrierte Copolymere aus Butadien/Isopren und Styrol,
B) mindestens eine Dispergierkomponente, die ein Copolymer darstellt, welches ein oder mehrere Blöcke A und ein oder mehrere Blöcke X umfasst, wobei der Block A Olefincopolymerisat-Sequenzen, hydrierte Polyisopren-Sequenzen, hydrierte Copolymere aus Butadien/Isopren oder hydrierte Copolymere aus Butadien/Isopren und Styrol darstellt und der Block X Polyacrylat-, Polymethacrylat- oder N-Vinyl-heterocyclische Sequenzen und/oder Sequenzen aus Gemischen von Polyacrylat-, Polymethacrylat- oder N-Vinyl-Heterocyclen darstellt,
C) Mineralöl und
D) mindestens einen Glycerinester, der von einer ungesättigten Carbonsäure mit 8 bis 30 Kohlenstoffatomen abgeleitet ist,
umfassen, gelingt es auf nicht ohne weiteres vorhersehbare Weise Polymerdispersionen zur Verfügung zu stellen, die besonders gute Tieftemperatureigenschaften aufweisen. So zeigen die erfindungsgemäßen Dispersionen bei tiefen Temperaturen eine geringe Viskosität. Darüber hinaus treten Trübungen nur in geringem Maß bei sehr tiefen Temperaturen auf.

Zugleich lassen sich durch die erfindungsgemäßen Polymerdispersionen eine Reihe weiterer Vorteile erzielen. Hierzu gehören unter anderem:
■ Die Herstellung der erfindungsgemäßen Dispersionen erfordert einen vergleichsweise geringen Energieaufwand. So genügen zur Herstellung insbesondere geringe Dispergiertemperaturen und kurze Dispergierzeiten. Weiterhin kann die Herstellung der Dispersion auch unter Verwendung von festem Polyolefin erfolgen.
■ Die erfindungsgemäßen Polymerdispersionen können besonders hohe Anteile an Polyolefinen umfassen, die eine viskositätsindexverbessernde bzw. in Schmierölen eine verdickende Wirkung aufweisen.
■ Die Polymerdispersionen der vorliegenden Erfindung können auf besonders einfache Weise auf eine vorgegebene Viskosität eingestellt werden.
■ Die Polymerdispersionen umfassen einen hohen Anteil an biologisch abbaubaren, ungiftigen und kostengünstigen Komponenten. Daher kann die Arbeitssicherheit und die Umweltfreundlichkeit im Vergleich zu den Dispersionen des Standes der Technik verbessert werden.
■ Polymerdispersionen gemäß dem Gegenstand der vorliegenden Erfindung zeigen eine geringe Viskosität, wobei diese Viskosität auch bei geringen Temperaturen eingehalten wird.
■ Die Polymerdispersionen der vorliegenden Erfindung können besonders leicht und einfach hergestellt werden. Hierbei können übliche, großtechnische Anlagen eingesetzt werden.

### Die Komponente A)

Als erfindungswesentliche Komponente A) umfasst die Polymerdispersion Polyolefine, die vorzugsweise eine viskositätsindexverbessernde bzw. verdickende Wirkung aufweisen. Derartige Polyolefine sind seit längerem bekannt und in den im Stand der Technik genannten Dokumenten beschrieben.

Zu diesen Polyolefinen gehören insbesondere Polyolefincopolymere (OCP) und hydrierte Styrol-Dien-Copolymere (HSD).

Die erfindungsgemäß zur verwendenden Polyolefincopolymere (OCP) sind an sich bekannt. Es handelt sich in erster Linie um aus Ethylen-, Propylen-, Isopren-, Butylen- und/oder weiteren -Olefinen mit 5 bis 20 C-Atomen aufgebaute Polymerisate, wie sie bereits als VI-Verbesserer empfohlen worden sind. Die Copolymere, die Dienkomponenten enthalten, werden im Allgemeinen hydriert, um die Oxidationsempfindlichkeit sowie die Vernetzungsneigung der Polymere zu vermindern.

Das Molekulargewicht Mw liegt im Allgemeinen bei 10 000 bis 300 000, vorzugsweise zwischen 50 000 und 150 000. Derartige Olefincopolymerisate sind beispielsweise in den deutschen Offenlegungsschriften DE-A 16 44 941, DE-A 17 69 834, DE-A 19 39 037, DE-A 19 63 039 und DE-A 20 59 981 beschrieben.

Besonders gut brauchbar sind Ethylen-Propylen-Copolymere, wobei auch der Einsatz von Terpolymeren mit Terkomponenten, wie Ethyliden-Norbornen (vgl. Macromolecular Reviews, Vol. 10 (1975)), bekannt ist. Allerdings ist jedoch deren Neigung zur Vernetzung beim Alterungsprozess mit einzukalkulieren. Die Verteilung kann dabei weitgehend statistisch sein; es können aber auch mit Vorteil Sequenzpolymere mit Ethylenblöcken angewendet werden. Das Verhältnis der Monomeren Ethylen-Propylen ist dabei innerhalb gewisser Grenzen variabel, die bei etwa 75 % für Ethylen und etwa 80 % für Propylen als obere Grenze angesetzt werden können. Infolge einer verminderten Löslichkeitstendenz in Öl sind bereits Polypropylen-Homopolymere weniger geeignet als Ethylen-Propylen-Copolymere. Neben Polymeren mit vorwiegend ataktischem Propyleneinbau sind auch solche mit ausgeprägterem iso- oder syndiotaktischen Propyleneinbau einsetzbar.

Derartige Produkte sind kommerziell beispielsweise unter den Handelsnamen Dutral^{®} CO 034, Dutral^{®} CO 038, Dutral^{®} CO 043, Dutral^{®} CO 058, Buna^{®} EPG 2050 oder Buna^{®} EPG 5050 erhältlich.

Hydrierte Styrol-Dien-Copolymere (HSD) sind ebenfalls bekannt, wobei diese Polymere beispielsweise in DE 21 56 122 beschrieben sind. Es handelt sich im Allgemeinen um hydrierte Isopren- oder Butadien-Styrol-Copolymere. Das Verhältnis von Dien zu Styrol liegt bevorzugt im Bereich von 2:1 bis 1:2, besonders bevorzugt bei ca. 55:45. Das Molekulargewicht Mw liegt im allgemeinen bei 10 000 bis 300 000, vorzugsweise zwischen 50 000 und 150 000. Der Anteil der Doppelbindungen nach der Hydrierung beträgt gemäß einem besonderen Aspekt der vorliegenden Erfindung höchstens 15%, besonders bevorzugt höchstens 5%, bezogen auf die Zahl der Doppelbindungen vor der Hydrierung.

Hydrierte Styrol-Dien-Copolymere können kommerziell unter den Handelsnamen ®SHELLVIS 50, 150, 200, 250 oder 260 erhalten werden.

Im Allgemeinen beträgt der Anteil der Komponenten A) mindestens 20 Gew.-%, vorzugsweise mindestens 30 Gew.-% und besonders bevorzugt mindestens 40 Gew.-%, ohne dass hierdurch eine Beschränkung erfolgen soll.

### Die Komponente B)

Die Komponente B) wird von mindestens einer Dispergierkompente gebildet, wobei diese Komponente häufig als Blockcopolymer angesehen werden kann. Vorzugsweise zeigt mindestens einer dieser Blöcke eine hohe Verträglichkeit mit den zuvor beschriebenen Polyolefinen der Komponenten A), wobei mindestens ein weiterer der in der Dispergierkomponenten enthaltenen Blöcke mit den zuvor beschriebenen Polyolefinen nur eine geringe Verträglichkeit aufweist. Derartige Dispergierkomponenten sind an sich bekannt, wobei bevorzugte Verbindungen im zuvor genannten Stand der Technik beschrieben sind.

Der mit der Komponenten A) kompatible Rest zeigt im Allgemeinen einen unpolaren Charakter, wohingegen der inkompatible Rest polarer Natur ist. Gemäß einem besonderen Aspekt der vorliegenden Erfindung lassen sich bevorzugte Dispergierkomponenten als Blockcopolymere auffassen, welche ein oder mehrere Blöcke A und ein oder mehrere Blöcke X umfassen, wobei der Block A Olefincopolymerisat-Sequenzen, hydrierte Polyisopren-Sequenzen, hydrierte Copolymere aus Butadien/Isopren oder hydrierte Copolymere aus Butadien/Isopren und Styrol darstellt und der Block X Polyacrylat-, Polymethacrylat- oder N-Vinyl-heterocyclische Sequenzen bzw. Sequenzen aus Gemischen von Polyacrylat-, Polymethacrylat- oder N-Vinyl-Heterocyclen darstellt.

Bevorzugte Dispergierkomponenten lassen sich durch Pfropfpolymerisation herstellen, wobei auf die zuvor beschriebenen Polyolefine, insbesondere auf die OCP und HSD, polare Monomere aufgepfropft werden. Hierzu können die Polyolefine durch mechanischen oder/und thermischen Abbau vorbehandelt werden.

Zu den polaren Monomeren gehören insbesondere (Meth)acrylate.

Der Ausdruck (Meth)acrylate umfasst Methacrylate und Acrylate sowie Mischungen aus beiden.

Gemäß einem besonderen Aspekt der vorliegenden Erfindung wird bei der Pfropfreaktion eine Monomerzusammensetzung eingesetzt aufweisend ein oder mehrere (Meth)acrylate der Formel (I) 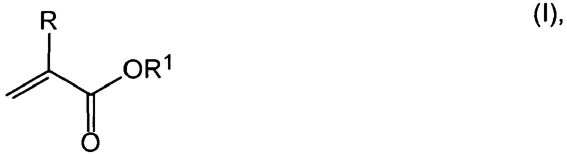 worin R Wasserstoff oder Methyl und R¹ Wasserstoff, einen linearen oder verzweigten Alkylrest mit 1 bis 40, vorzugsweise 1 bis 24 Kohlenstoffatomen bedeuten.

Zu den bevorzugten Monomeren gemäß Formel (I) gehören unter anderem (Meth)acrylate, die sich von gesättigten Alkoholen ableiten, wie Methyl(meth)acrylat, Ethyl(meth)acrylat, n-Propyl(meth)acrylat, iso-Propyl(meth)acrylat, n-Butyl(meth)acrylat, tert-Butyl(meth)acrylat, Pentyl(meth)acrylat, Hexyl(meth)acrylat, 2-Ethylhexyl(meth)acrylat, Heptyl(meth)acrylat, 2-tert.-Butylheptyl(meth)acrylat, Octyl(meth)acrylat, 3-iso-Propylheptyl(meth)acrylat, Nonyl(meth)acrylat, Decyl(meth)acrylat, Undecyl(meth)acrylat, 5-Methylundecyl(meth)acrylat, Dodecyl(meth)acrylat, 2-Methyldodecyl(meth)acrylat, Tridecyl(meth)acrylat, 5-Methyltridecyl(meth)acrylat, Tetradecyl(meth)acrylat, Pentadecyl(meth)acrylat, Hexadecyl(meth)acrylat, 2-Methylhexadecyl(meth)acrylat, Heptadecyl(meth)acrylat, 5-iso-Propylheptadecyl(meth)acrylat, 4-tert.-Butyloctadecyl(meth)acrylat, 5-Ethyloctadecyl(meth)acrylat, 3-iso-Propyloctadecyl(meth)acrylat, Octadecyl(meth)acrylat, Nonadecyl(meth)acrylat, Eicosyl(meth)acrylat, Cetyleicosyl(meth)acrylat, Stearyleicosyl(meth)acrylat, Docosyl(meth)acrylat und/oder Eicosyltetratriacontyl(meth)acrylat; (Meth)acrylate, die sich von ungesättigten Alkoholen ableiten, wie z. B. 2-Propinyl(meth)acrylat, Allyl(meth)acrylat, Vinyl(meth)acrylat, Oleyl(meth)acrylat; Cycloalkyl(meth)acrylate, wie Cyclopentyl(meth)acrylat, 3-Vinylcyclohexyl(meth)acrylat, Cyclohexyl(meth)acrylat, Bornyl(meth)acrylat.

Die (Meth)acrylate mit langkettigem Alkoholrest lassen sich beispielsweise durch Umsetzen von den entsprechenden Säuren und/oder kurzkettigen (Meth)acrylaten, insbesondere Methyl(meth)acrylat oder Ethyl(meth)acrylat, mit langkettigen Fettalkoholen erhalten, wobei im allgemeinen eine Mischung von Estern, wie beispielsweise (Meth)acrylaten mit verschieden langkettigen Alkoholresten entsteht. Zu diesen Fettalkoholen gehören unter anderem Oxo Alcohol® 7911, Oxo Alcohol® 7900, Oxo Alcohol® 1100; Alfol® 610, Alfol® 810, Lial® 125 und Nafol®-Typen (Sasol); Alphanol® 79 (ICI); Epal® 610 und Epal® 810 (Afton); Linevol® 79, Linevol® 911 und Neodol® 25E (Shell); Dehydad®, Hydrenol®- und Lorol®-Typen (Cognis); Acropol® 35 und Exxal® 10 (Exxon Chemicals); Kalcol® 2465 (Kao Chemicals).

Der Anteil der (Meth)acrylate gemäß Formel (I) an der Monomerzusammensetzung, die insbesondere zur Herstellung der Blöcke X bzw. zur Pfropfung eingesetzt werden kann, beträgt vorzugsweise 10 bis 100 Gew.-%, besonders bevorzugt 50 bis 100 Gew.-% und ganz besonders bevorzugt 50 bis 99,9 Gew.-%, bezogen auf das Gesamtgewicht der Monomerzusammensetzung.

Des Weiteren kann die Monomerzusammensetzung ein oder mehrere (Meth)acrylate der Formel (II) aufweisen 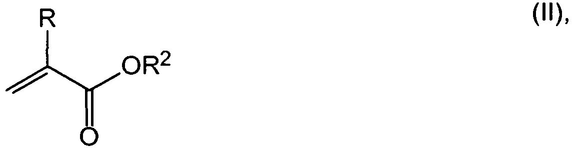 worin R Wasserstoff oder Methyl und R² einen mit einer OH-Gruppe substituierten Alkylrest mit 2 bis 20 Kohlenstoffatomen oder einen alkoxylierten Rest der Formel (III) 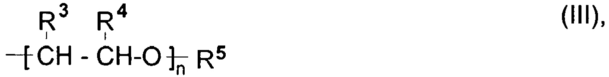 worin R³ und R⁴ unabhängig für Wasserstoff oder Methyl, R⁵ Wasserstoff oder einen Alkylrest mit 1 bis 40, vorzugsweise 1 bis 24 Kohlenstoffatomen und n eine ganze Zahl von 1 bis 90, vorzugsweise 1 bis 20 steht, bedeuten.

(Meth)acrylate gemäß Formel (II) sind dem Fachmann bekannt. Zu diesen zählen unter anderem Hydroxylalkyl(meth)acrylate, wie 3-Hydroxypropylmethacrylat, 3,4-Dihydroxybutylmethacrylat, 2-Hydroxyethylmethacrylat, 2-Hydroxypropylmethacrylat, 2,5-Dimethyl-1,6-hexandiol(meth)acrylat, 1,10-Decandiol(meth)acrylat, 1,2-Propandiol(meth)acrylat; Polyoxyethylen- und Polyoxypropylen-Derivate der (Meth)acrylsäure, wie Triethylenglycol(meth)acrylat, Tetraethylenglycol(meth)acrylat und Tetrapropylengylcol(meth)acrylat.

Der Anteil der (Meth)acrylate gemäß Formel (II) an der Monomerzusammensetzung, die insbesondere zur Herstellung der Blöcke X bzw. zur Pfropfung eingesetzt werden kann, kann vorzugsweise 0 bis 50 Gew.-%, besonders bevorzugt 0,1 bis 20 Gew.-%, bezogen auf das Gesamtgewicht der Monomerzusammensetzung, betragen.

Des Weiteren kann die Monomerzusammensetzung ein oder mehrere (Meth)acrylate der Formel (IV) 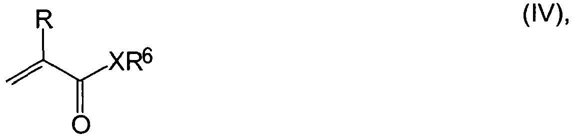 worin R Wasserstoff oder Methyl, X Sauerstoff oder eine Aminogruppe der Formel -NH- oder -NR⁷-, worin R⁷ für einen Alkylrest mit 1 bis 40, vorzugsweise 1 bis 6 Kohlenstoffatomen steht, und R⁶ einen mit mindestens einer -NR⁸R⁹-Gruppe substituierten linearen oder verzweigten Alkylrest mit 2 bis 20, vorzugsweise 2 bis 6 Kohlenstoffatomen bedeuten, wobei R⁸ und R⁹ unabhängig von einander für Wasserstoff, einen Alkylrest mit 1 bis 20, vorzugsweise 1 bis 6 stehen oder worin R⁸ und R⁹ unter Einbeziehung des Stickstoffatoms und gegebenenfalls eines weiteren Stickstoff oder Sauerstoffatoms einen 5- oder 6-gliederigen Ring bilden, der gegebenenfalls mit C₁-C₆-Alkyl substituiert sein kann.

Zu den (Meth)acrylaten bzw. (Meth)acrylamiden gemäß Formel (IV) gehören unter anderem
Amide der (Meth)acrylsäure, wie
N-(3-Dimethylaminopropyl)methacrylamid,
N-(Diethylphosphono)methacrylamid,
1-Methacryloylamido-2-methyl-2-propanol,
N-(3-Dibutylaminopropyl)methacrylamid,
N-t-Butyl-N-(diethylphosphono)methacrylamid,
N,N-bis(2-Diethylaminoethyl)methacrylamid,
4-Methacryloylamido-4-methyl-2-pentanol,
N-(Methoxymethyl)methacrylamid,
N-(2-Hydroxyethyl)methacrylamid,
N-Acetylmethacrylamid,
N-(Dimethylaminoethyl)methacrylamid,
N-Methyl-N-phenylmethacrylamid,
N,N-Diethylmethacrylamid,
N-Methylmethacrylamid,
N,N-Dimethylmethacrylamid,
N-Isopropylmethacrylamid;
Aminoalkylmethacrylate, wie
tris(2-Methacryloxyethyl)amin,
N-Methylformamidoethylmethacrylat,
2-Ureidoethylmethacrylat;
heterocyclische (Meth)acrylate, wie 2-(1-Imidazolyl)ethyl(meth)acrylat, 2-(4-Morpholinyl)ethyl(meth)acrylat und 1-(2-Methacryloyloxyethyl)-2-pyrrolidon.

Der Anteil der (Meth)acrylate gemäß Formel (IV) an der Monomerzusammensetzung, die insbesondere zur Herstellung der Blöcke X bzw. zur Pfropfung eingesetzt werden kann, beträgt vorzugsweise 0 bis 15 Gew.-%, besonders bevorzugt 0,1 bis 5 Gew.-%, bezogen auf das Gesamtgewicht der Monomerzusammensetzung.

Des Weiteren
können die Monomerzusammensetzungen heterocyclische Vinylverbindungen, wie 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-1-vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiophen, Vinylthiolan, Vinylthiazole und hydrierte Vinylthiazole, Vinyloxazole und hydrierte Vinyloxazole umfassen.

Neben (Meth)acrylaten sind als Monomere insbesondere Monomere bevorzugt, die dispergierende Wirkungen haben, wie beispielsweise die zuvor genannten heterocyclischen Vinylverbindungen und die (Meth)acrylate gemäß Formel (II) oder (IV). Der Begriff dispergierende Wirkungen bezieht sich insbesondere auf die Eigenschaft, Schwebteilchen, beispielsweise Russpartikel, Partikel, die sich durch Oxidation von Mineralöl gebildet haben, oder Metallpartikel in einem Mineralöl oder Schmieröl in Schwebe zu halten. Diese Monomere werden des Weiteren als dispergierende Monomere bezeichnet.

Die zuvor genannten ethylenisch ungesättigten Monomere können einzeln oder als Mischungen eingesetzt werden. Es ist des Weiteren möglich, die Monomerzusammensetzung während der Polymerisation zu variieren, um definierte Strukturen, wie beispielsweise Blockcopolymere, zu erhalten.

Das Gewichtsverhältnis der mit den Polyolefinen kompatiblen Teile der Dispergierkomponente, insbesondere der Blöcke A, zu den mit den Polyolefinen inkompatiblen Teile der Dispergierkomponente, insbesondere den Blöcken X, kann in weiten Bereichen liegen. Im Allgemeinen liegt dieses Verhältnis im Bereich von 50:1 bis 1:50, insbesondere 20:1 bis 1:20 und besonders bevorzugt 10:1 bis 1:10.

Die Herstellung der zuvor dargestellten Dispergierkomponenten ist in der Fachwelt bekannt. Beispielsweise kann die Herstellung über eine Polymerisation in Lösung erfolgen. Derartige Verfahren sind unter anderem in DE-A 12 35 491, BE-A 592 880, US-A 4 281 081, US-A 4 338 418 und US-A-4,290,025 beschrieben.

Dabei kann in einem geeigneten Reaktionsgefäß, zweckmäßig ausgestattet mit Rührer, Thermometer, Rückflußkühler und Dosierleitung, ein Gemisch aus dem Polyolefin, insbesondere ein OCP bzw. ein HSD, und einem oder mehreren der zuvor dargelegten Monomere vorgelegt werden.

Nach erfolgtem Lösen unter Inertatmosphäre, wie z. B. Stickstoff, unter Erhitzen, beispielsweise auf 110 °C, wird ein Anteil eines an sich üblichen Radikalinitiators, beispielsweise aus der Gruppe der Perester, eingesetzt, zunächst beispielsweise ca. 0,7 Gew.-% bezogen auf die Monomeren.

Demnach dosiert man über einige Stunden, beispielsweise 3,5 Stunden hinweg ein Gemisch aus den restlichen Monomeren unter Zusatz weiteren Initators, beispielsweise ca. 1,3 Gew.-% bezogen auf die Monomeren zu. Man füttert zweckmäßig einige Zeit nach Zulaufende noch etwas Initiator nach, beispielsweise nach zwei Stunden. Die Gesamtpolymerisationsdauer kann als Richtwert beispielsweise mit ca. 8 Stunden angenommen werden. Nach Polymerisationsende verdünnt man zweckmäßig mit einem geeigneten Lösungsmittel, wie z. B. Mineralöl, einem Pflanzenöl oder einem Phthalsäureester wie Dibutylphthalat. Man erhält in der Regel eine nahezu klare, viskose Lösung.

Des Weiteren kann die Herstellung der Polymerdispersionen in einem Kneter, einem Extruder oder in einem statischen Mischer erfolgen. Durch die Behandlung im Gerät erfolgt unter dem Einfluss der Scherkräfte, der Temperatur und der Initiator-Konzentration ein Abbau des Molekulargewichts des Polyolefins, insbesondere des OCPs bzw. HSDs.

Beispiele für bei der Pfropf-Copolymerisation geeignete Initiatoren sind Cumolhydroperoxyd, Dicumylperoxyd, Benzoylperoxyd, Azodiisobuttersäuredinitril, 2,2-Bis(t-Butylperoxy)butan, Diethylperoxydicarbonat und tert.-Butylperoxyd. Die Verarbeitungstemperatur beträgt vorzugsweise zwischen 80 °C und 350 °C. Die Verweilzeit im Kneter oder Extruder beträgt vorzugsweise zwischen 1 Minute und 10 Stunden.

Je länger die Dispersion im Kneter oder Extruder behandelt wird, desto geringer wird das Molekulargewicht. Die Temperatur und die Konzentration an radikalbildenden Initiatoren können entsprechend dem gewünschten Molekulargewicht eingestellt werden. Die erfindungsgemäße lösungsmittel-freie Polymer-in-Polymer-Dispersion kann durch Einarbeitung in geeignete Trägermedien in eine gut handhabbare, flüssige Polymer-/Polymer-Emulsion überführt werden.

Der Anteil der Komponenten B) beträgt im allgemeinen bis zu 30 Gew.-%, insbesondere liegt dieser Anteil im Bereich von 5 bis 15 Gew.-%, ohne dass hierdurch eine Beschränkung erfolgen soll. Der Einsatz von größeren Mengen an Komponente B) ist häufig unwirtschaftlich. Geringere Mengen führen vielfach zu einer geringeren Stabilität der Polymerdispersion.

### Die Komponente C)

Die Komponente C) ist für den Erfolg der vorliegenden Erfindung wesentlich. Mineralöle sind an sich bekannt und kommerziell erhältlich. Sie werden im Allgemeinen aus Erdöl oder Rohöl durch Destillation und/oder Raffination und gegebenenfalls weitere Reinigungs- und Veredelungsverfahren gewonnen, wobei unter den Begriff Mineralöl insbesondere die höhersiedenden Anteile des Roh- oder Erdöls fallen. Im Allgemeinen liegt der Siedepunkt von Mineralöl höher als 200 °C, vorzugsweise höher als 300 °C, bei 5000 Pa. Die Herstellung durch Schwelen von Schieferöl, Verkoken von Steinkohle, Destillation unter Luftabschluß von Braunkohle sowie Hydrieren von Stein- oder Braunkohle ist ebenfalls möglich. Zu einem geringen Anteil werden Mineralöle auch aus Rohstoffen pflanzlichen (z. B. aus Jojoba, Raps) od. tierischen (z. B. Klauenöl) Ursprungs hergestellt. Dementsprechend weisen Mineralöle, je nach Herkunft unterschiedliche Anteile an aromatischen, cyclischen, verzweigten und linearen Kohlenwasserstoffen auf.

Im allgemeinen unterscheidet man paraffinbasische, naphthenische und aromatische Anteile in Rohölen bzw. Mineralölen, wobei die Begriffe paraffinbasischer Anteil für längerkettig bzw. stark verzweigte iso-Alkane und naphtenischer Anteil für Cycloalkane stehen. Darüber hinaus weisen Mineralöle, je nach Herkunft und Veredelung unterschiedliche Anteile an n-Alkanen, iso-Alkanen mit einem geringen Verzweigungsgrad, sogenannte monomethylverzweigten Paraffine, und Verbindungen mit Heteroatomen, insbesondere O, N und/oder S auf, denen bedingt polare Eigenschaften zugesprochen werden. Die Zuordnung ist jedoch schwierig, da einzelne Alkanmoleküle sowohl langkettig verzweigte Gruppen als auch Cycloalkanreste und aromatische Anteile aufweisen können. Für die Zwecke der vorliegenden Erfindung kann die Zuordnung beispielsweise gemäß DIN 51 378 erfolgen. Polare Anteile können auch gemäß ASTM D 2007 bestimmt werden.

Der Anteil der n-Alkane beträgt in bevorzugten Mineralölen weniger als 3 Gew.-%, der Anteil der O, N und/oder S-haltigen Verbindungen weniger als 6 Gew.-%. Der Anteil der Aromaten und der monomethylverzweigten Paraffine liegt im Allgemeinen jeweils im Bereich von 0 bis 40 Gew.-%. Gemäß einem interssanten Aspekt umfaßt Mineralöl hauptsächlich naphtenische und paraffinbasische Alkane, die im allgemeinen mehr als 13, bevorzugt mehr als 18 und ganz besonders bevorzugt mehr als 20 Kohlenstoffatome aufweisen. Der Anteil dieser Verbindungen ist im Allgemeinen ≥ 60 Gew.-%, vorzugsweise ≥ 80 Gew.-%, ohne daß hierdurch eine Beschränkung erfolgen soll. Ein bevorzugtes Mineralöl enthält 0,5 bis 30 Gew.-% aromatische Anteile, 15 bis 40 Gew.-% naphthenische Anteile, 35 bis 80 Gew.-% paraffinbasische Anteile, bis zu 3 Gew.-% n-Alkane und 0,05 bis 5 Gew.-% polare Verbindungen, jeweils bezogen auf das Gesamtgewicht des Mineralöls.

Eine Analyse von besonders bevorzugten Mineralölen, die mittels herkömmlicher Verfahren, wie Hamstofftrennung und Flüssigkeitschromatographie an Kieselgel, erfolgte, zeigt beispielsweise folgende Bestandteile, wobei sich die Prozentangaben auf das Gesamtgewicht des jeweils eingesetzten Mineralöls beziehen:
n-Alkane mit ca. 18 bis 31 C-Atome:
0,7 - 1,0 %,
gering verzweigte Alkane mit 18 bis 31 C-Atome:
1,0 - 8,0 %,
Aromaten mit 14 bis 32 C-Atomen:
0,4 - 10,7 %,
Iso- und Cyclo-Alkane mit 20 bis 32 C-Atomen:
60,7- 82,4 %,
polare Verbindungen:
0,1 - 0,8 %,
Verlust:
6,9 - 19,4 %.

Wertvolle Hinweise hinsichtlich der Analyse von Mineralölen sowie eine Aufzählung von Mineralölen, die eine abweichende Zusammensetzung aufweisen, findet sich beispielsweise in Ullmanns Encyclopedia of Industrial Chemistry, 5th Edition on CD-ROM, 1997, Stichwort "lubricants and related products".

Gemäß einem besonderen Aspekt der vorliegenden Erfindung enthält die Polymerdispersion vorzugsweise 2 bis 40 Gew.-%, insbesondere 5 bis 30 Gew.-% und besonders bevorzugt 10 bis 20 Gew.-% Mineralöl.

### Die Komponente D)

Die Komponente D) ist für die vorliegende Polymerdispersion obligatorisch, wobei diese Komponente aus mindestens einem Glycerinester, der von einer ungesättigten Carbonsäure mit 8 bis 30 Kohlenstoffatomen abgeleitet ist, gebildet wird. Vorzugsweise weist mindestens einer der von einer Carbonsäure abgeleiteten Reste 12 bis 24, besonders bevorzugt 14 bis 20 Kohlenstoffatome auf.

Als Glycerinester wird vorliegend ein Ester einer Carbonsäure mit Glycerin (Propan-1,2,3-triol) verstanden. Bevorzugt können zwei oder drei der Hydroxygruppen des Glycerins mit zwei oder drei Carbonsäuren verestert sein, die 8 bis 30, vorzugsweise 12 bis 24 und besonders bevorzugt 14 bis 20 Kohlenstoffatome aufweisen. Von besonderem Interesse sind insbesondere Triglycerinester, die drei Gruppen aufweisen, die von Carbonsäuren mit 12 bis 24, besonders bevorzugt 14 bis 20 Kohlenstoffatomen abgeleitet sind.

Bevorzugte Triglycerinester weisen insbesondere die Formel (V) auf 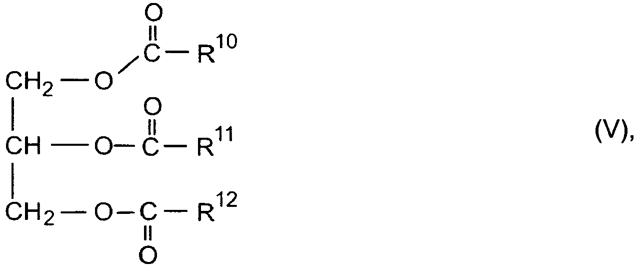 worin die Reste R¹⁰, R¹¹ und R¹² unabhängig einen Kohlenwasserstoffrest mit 7 bis 29, vorzugsweise 11 bis 23 und besonders bevorzugt 13 bis 19 Kohlenstoffatomen bedeuten und mindestens einer der Reste R¹⁰, R¹¹ und R¹² mindestens eine Doppelbindung umfasst.

Kohlenwasserstoffreste bezeichnen vorliegend insbesondere gesättigte und/oder ungesättigte Reste, die vorzugsweise aus Kohlenstoff und Wasserstoff bestehen. Diese Reste können cyclisch, linear oder verzweigt sein. Hierzu gehören insbesondere Alkylreste und Alkenylreste, wobei die Alkenylreste eine, zwei, drei oder mehr Kohlenstoff-Kohlenstoff-Doppelbindungen umfassen können.

Zu den bevorzugten Alkylresten gehören insbesondere die Heptyl-, Octyl-, 1,1,3,3-Tetramethylbutyl, Nonyl-, Decyl-, Undecyl-, Dodecyl-, Tridecyl-, Tetradecyl-, Pentadecyl-, Hexadecyl-, Heptadecyl-, Octadecyl-, Nonadecyl-, Eicosyl- und die Cetyleicosyl-Gruppe.

Beispiele für Alkenylreste mit einer Kohlenstoff-Kohlenstoff-Doppelbindung sind unter anderem die Heptenyl-, Octenyl-, Nonenyl-, Decenyl-, Undecenyl-, Dodecenyl-, Tridecenyl-, Tetradecenyl-, Pentadecenyl-, Hexadecenyl-, Heptadecenyl-, Octadecenyl-, Nonadecenyl-, Eicosenyl- und die Cetyleicosenyl-Gruppe.

Zu den Alkenylreste mit zwei, drei oder mehr Kohlenstoff-Kohlenstoff-Doppelbindung gehören unter anderem die 8,11- Heptadecadienyl und die 8,11,14- Heptadecatrienyl-Gruppe.

Die zuvor dargelegten Kohlenwasserstoffreste können Substituenten und/oder Heteroatome aufweisen. Hierzu gehören insbesondere Gruppen, die Sauerstoff, Stickstoff und/oder Schwefel umfassen, wie beispielsweise Hydroxygruppen, Thiolgruppen oder Aminogruppen. Der Anteil dieser Gruppen sollte jedoch so gering sein, dass die Eigenschaften der Glyceride nicht nachteilig beeinflusst werden.

Die Glycerinester gemäß Komponente D) umfassen mindestens einen Rest, der von einer ungesättigten Carbonsäure mit 8 bis 30 Kohlenstoffatomen abgeleitet ist. Wie bereits dargelegt, kann der Glycerinester zusätzlich Reste umfassen, die von gesättigten Carbonsäuren abgeleitet sind. Vorzugsweise beträgt der Anteil an Resten, die von ungesättigten Carbonsäuren mit 8 bis 30, vorzugsweise 12 bis 24 und besonders bevorzugt 14 bis 20 Kohlenstoffatomen abgeleitet sind, mindestens 20 Gew.-%, besonders bevorzugt mindestens 60 Gew.-% und ganz besonders bevorzugt mindestens 80 Gew.-%, bezogen auf das Gesamtgewicht der Säuren, von denen der Glycerinester abgeleitet ist. Falls eine Mischung von unterschiedlichen Glycerinestern eingesetzt wird, beziehen sich die zuvor dargelegten Werte an ungesättigten Fettsäuren auf das Fettsäurespektrum, das nach einer Verseifung erhalten wird.

Zu den bevorzugten gesättigten Carbonsäuren, von denen die Glycerinester gemäß Komponente D) abgeleitet sind, gehören unter anderem Caprinsäure, Laurinsäure, Myristinsäure, Palmitinsäure, Margarinsäure, Stearinsäure, Arachinsäure, Behensäure, Lignocerinsäure und Cerotinsäure.

Beispiele für einfach ungesättigte Carbonsäuren sind unter anderem Palmitolsäure, Ölsäure, Elaidinsäure, Vaccensäure, Icosensäure, Cetoleinsäure, Nervonsäure, Erucasäure, Petroselinsäure und Ricinolsäure.

Des Weiteren kann der Glycerinester von mehrfachungesättigten Fettsäuren abgeleitet sind. Hierzu gehören unter anderem Linolsäure, Linolensäure und Elaeostearinsäure.

Gemäß einem besonderen Aspekt der vorliegenden Erfindung kann gemäß Komponenten D) ein Glycerinester eingesetzt werden, der mindestens 5 Gew.-%, vorzugsweise mindestens 10 Gew.-% Ölsäure und mindestens 10 Gew.-%, vorzugsweise mindestens 20 Gew.-% Linolsäure umfasst, bezogen auf das Gesamtgewicht der Säuren, von denen der Glycerinester abgeleitet ist.

Diese Werte sind als Durchschnittswerte aufzufassen, falls eine Mischung von unterschiedlichen Glycerinestern eingesetzt wird.

Von besonderem Interesse sind insbesondere Glycerinester, die einen geringen Anteil an gesättigten Fettsäuren umfassen. Vorzugsweise kann der Anteil der gesättigten Fettsäuren höchstens 50 Gew.-%, besonders bevorzugt höchstens 30 Gew.-% und ganz besonders bevorzugt höchstens 10 Gew.-% betragen, bezogen auf das Gesamtgewicht der Säuren, von denen der Glycerinester abgeleitet ist. Diese Werte sind als Durchschnittswerte aufzufassen, falls eine Mischung von unterschiedlichen Glycerinestern eingesetzt wird.

Gemäß einer zweckmäßigen Abwandlung der vorliegenden Erfindung können vorzugsweise Glycerinester eingesetzt werden, die einen Schmelzpunkt kleiner oder gleich 15°C, besonders bevorzugt kleiner oder gleich 5°C und ganz besonders bevorzugt kleiner oder gleich 0° aufweisen. Der Schmelzpunkt kann gemäß ASTM D 87 bestimmt werden.

Mit besonderem Vorteil können weiterhin Glycerinester verwendet werden, die einen Trübungspunkt aufweisen, der kleiner oder gleich 5°C, besonders bevorzugt kleiner oder gleich 0°C ist, wobei der Trübungspunkt gemäß ASTM D 2500 bestimmt werden kann.

Die Viskosität des erfindungsgemäß eingesetzten Glycerinesters kann vorzugsweise höchstens 100 cSt, besonders bevorzugt höchstens 40 cSt betragen, wobei die Viskosität bei 40°C gemäß ASTM D 445 bestimmt werden kann.

Erfindungsgemäß kann ein spezifischer Glycerinester als Komponente D) eingesetzt werden. Im Allgemeinen werden die Glycerinester jedoch als Mischung von unterschiedlichen Estern verwendet, wie diese beispielhaft in Pflanzenölen enthalten sind. Daher können sich die zuvor dargelegten Werte auf die jeweils eingesetzte Glycerinestermischung beziehen.

Vorzugsweise kann die erfindungsgemäße Polymerdispersion mindestens ein Pflanzenöl umfassen. Hierbei können auch Pflanzenöle eingesetzt werden, die nur für technische Zwecke geeignet sind. Dementsprechend können auch Pflanzenöle mit einem hohen Anteil an Verunreinigungen eingesetzt werden.

Zu den bevorzugten Pflanzenölen gehören insbesondere Rapsöl, Korianderöl, Sojaöl, Baumwollsamenöl, Sonnenblumenöl, Ricinusöl, Olivenöl, Erdnussöl, Maisöl, Mandelöl, Palmkernöl, Kokosnussöl, Senfsamenöl. Diese Öle können einzeln oder als Mischung zur Herstellung der vorliegenden Dispersionen Verwendung finden. Diese Öle können aus natürlich vorkommenden Pflanzen, gezüchteten Pflanzen oder gentechnisch veränderten Pflanzen gewonnen werden.

Der Anteil an Glycerinester in der Polymerdispersion kann in einem weiten Bereich liegen, wobei die Dispersion vorzugsweise 20 bis 80 Gew.-%, besonders bevorzugt 30 bis 70 Gew.-% Glycerinester gemäß Komponente D), bezogen auf das Gesamtgewicht der Dispersion, umfasst.

Das Gewichtsverhältnis von Mineralöl zu den Glycerinestem gemäß Komponente D) kann in weiten Bereichen liegen. Besonders bevorzugt liegt dieses Verhältnis im Bereich von 2:1 bis 1:25, insbesondere 1:2 bis 1:10.

Der Anteil der Komponenten C) und D) an der konzentrierten Polymerdispersion kann in weiten Bereichen liegen, wobei dieser Anteil insbesondere von den eingesetzten Polyolefinen und Dispergierkomponenten abhängig ist. Im Allgemeinen beträgt der Anteil der Komponenten C) und D) zusammen 79 bis 25 Gew.-%, vorzugsweise unter 70, speziell 60 bis 40 Gew.-%, bezogen auf die gesamte Polymerdispersion.

Neben den zuvor genannten Komponenten kann die erfindungsgemäße Polymerdispersion weitere Additive und Zusatzstoffe enthalten. Hierzu gehören insbesondere Stoffe, die in Pflanzenölen enthalten sind. Daher können Pflanzenöle vielfach ohne eine aufwendige Reinigung eingesetzt werden.

Vorzugsweise umfassen die erfindungsgemäßen Polymerdispersionen Stabilisatoren und/oder Antioxidantien. Diese Stoffe sind an sich bekannt, wobei hierzu insbesondere sauerstoffhaltige Verbindungen, wie zum Beispiel Hydrochinone, Hydrochinonether, wie Hydrochinonmonomethylether oder Ditert-butylbrenzcatechin, oder sterisch gehinderte Phenole, und stickstoffhaltige Verbindungen, wie Phenothiazin, p-Phenylendiamin und Methylenblau zählen. Der Anteil an Antioxidantien liegt vorzugsweise im Bereich von 0 bis 4 Gew.-%, besonders bevorzugt im Bereich von 0,1 bis 2 Gew.-%, bezogen auf das Gesamtgewicht der Polymerdispersion.

Weiterhin kann eine erfindungsgemäße Polymerdispersion weitere Lösungsmittel und/oder Trägermedien, die aus dem zuvor genannten Stand der Technik bekannt sind, enthalten.

Des Weiteren kann die Polymerdispersion der vorliegenden Erfindung Verbindungen mit einer Dielektrizitätskonstanten größer oder gleich 9, insbesondere größer oder gleich 20 und besonders bevorzugt größer oder gleich 30 umfassen. Überraschend wurde festgestellt, dass durch den Zusatz dieser Verbindungen die Viskosität der Polymerdispersion erniedrigt werden kann. Hierdurch ist insbesondere die Einstellung der Viskosität auf einen vorgegebenen Wert möglich.

Die Dielektrizitätskonstante kann gemäß Handbook of Chemistry and Physics, David R. Lide, 79th Edition, CRS Press angegebenen Methoden bestimmt werden, wobei die Dielektrizitätskonstante bei 20°C gemessen wird.

Zu den besonders geeigneten Verbindungen gehören unter anderem Wasser, Glykole, insbesondere Ethylenglykol, 1,2-Propylenglykol, 1,3-Propylenglykol, Polyethylenglykol; Alkohole, insbesondere Methanol, Ethanol, Butanol, Glycerin; ethoxylierte Alkohole, beispielsweise 2-fach ethoxyliertes Butanol, 10-fach ethoxyliertes Methanol; Amine, insbesondere Ethanolamin, 1,2 Ethandiamin und Propanolamin; halogenierte Kohlenwasserstoffe, insbesondere 2-Chlorethanol, 1,2 Dichlorethan, 1,1 Dichloraceton; Ketone, insbesondere Aceton.

Der Anteil der zuvor beschriebenen Verbindungen in der Polymerdispersion kann in weiten Bereichen liegen. Im Allgemeinen umfasst die Polymerdispersion bis zu 15 Gew.-%, insbesondere 0,3 bis 5 Gew.-% Verbindungen mit einer Dielektrizitätskonstanten größer oder gleich 9.

Die Polymerdispersionen können durch bekannte Verfahren hergestellt werden, wobei diese Verfahren in den zuvor genannten Dokumenten des Standes der Technik dargelegt sind. So kann man beispielsweise die vorliegenden Polymerdispersionen herstellen, indem man die Komponente A) in einer Lösung der Komponenten B) unter Anwendung von Scherkräften bei einer Temperatur im Bereich von 50 bis 150°C, besonders bevorzugt 60 bis 120°C dispergiert. Die Lösung der Komponenten B) umfasst im Allgemeinen die Komponenten C) und D).

Mit besonderem Vorteil kann das Polyolefin gemäß Komponente A) der Lösung als Feststoff hinzu gegeben werden.

Hierbei genügen vielfach relativ geringe Dispergierzeiten, die vorzugsweise im Bereich von 1 bis 10 h, besonders bevorzugt 1 bis 6 h liegen. Die eingesetzten Scherenergien sind ebenfalls vielfach geringer als diese bei herkömmlichen Systemen notwendig sind. Vorteilhaft kann der Leistungseintrag höchstens 2 kW/m³, besonders bevorzugt höchstens 1 kW/m³ betragen, bezogen auf das Dispergieren von 1 kg Polyolefin in einer Lösung, die 0,5 kg Dispergierkomponente, 0,1 kg Mineralöl und 1 kg Glycerinester enthält.

Nachfolgend soll die vorliegende Erfindung anhand von Beispielen erläutert werden, ohne dass hierdurch eine Beschränkung erfolgen soll.

### Beispiel 1

In einem 2-Liter-Vierhalskolben mit Rührer, Thermometer und Rückflußkühler werden 190 g eines Ethylen-Propylen-Copolymerisats (z.B. Dutral CO 038) der Verdickungswirkung 11,0 mm/s² in bezug auf KV100 in einer Mischung bestehend aus 680 g eines 150N-Öles und 130 g eines 100N-Öles eingewogen und bei 100°C innerhalb 10-12 h gelöst.

Zu 555,0 g dieser Lösung werden 61,7 g einer Mischung bestehend aus Alkylmethacrylaten mit Alkylsubstituenten der Kettenlänge C10 bis C18 zugegeben und das Reaktionsgemisch durch Zugabe von Trockeneis inertisiert. Nach Erreichen der Polymerisationstemperatur von 100°C werden 2,06 g tert.-Butylperoxy-2-ethylhexanoat zugegeben und gleichzeitig ein Monomerzulauf bestehend aus 883,3 g der zuvor dargelegten Zusammensetzung und 11,48 g tert.-Butylperoxy-2-ethylhexanoat gestartet und über eine Zulaufzeit von 3,5 h gleichmäßig zugegeben. Zwei Stunden nach Zulaufende werden 1,89 g tert.-Butylperoxy-2-ethylhexanoat zugegeben und weitere zwei Stunden bei 100°C gerührt.

In einem 1-Liter-Wittschen Topf mit Intermig-Rührer werden 152,8 g der hergestellten Lösung, 179,1 g raffiniertes Pflanzenöl (z.B. Sojaöl), 34,0 g eines Ethylen-Propylen-Copolymerisats (z.B. auf eine KV100 von 10,50 cSt abgebautes Dutral CO 038), 134,1 g eines weiteren Ethylen-Propylen-Copolymerisats (z.B. auf eine KV100 von 11,35 cSt abgebautes Dutral CO 058) und 6,11 g eines Stabilisators (z.B. Irganox 1076) eingewogen. Innerhalb von 12-18 h entsteht bei 100°C und 150 rpm eine Dispersion. Anschließend werden 400,0 g der entstandenen Dispersion durch Zugabe von 88,9 g des raffinierten Pflanzenöls auf 45% Polymergehalt verdünnt und das Gemisch eine halbe Stunde weitergerührt. Die kinematische Viskosität bei 100°C (KV100) nach DIN 51 562 (Ubbelohde-Viskosimeter) des so hergestellten Produkts beträgt 3100 cSt. Die KV100 einer 3,42 %igen Lösung des Produkts in einem 150N-Öl beträgt 11,87 cSt.

## Patentansprüche

1. Polymerdispersion umfassend
A) mindestens ein dispergiertes Polyolefin, umfassend ein oder mehrere Olefincopolymere, hydriertes Polyisopren, hydrierte Copolymere aus Butadien/Isopren oder hydrierte Copolymere aus Butadien/Isopren und Styrol,
B) mindestens eine Dispergierkomponente, die ein Copolymer darstellt, welches ein oder mehrere Blöcke A und ein oder mehrere Blöcke X umfasst, wobei der Block A Olefincopolymerisat-Sequenzen, hydrierte Polyisopren-Sequenzen, hydrierte Copolymere aus Butadien/Isopren oder hydrierte Copolymere aus Butadien/Isopren und Styrol darstellt und der Block X Polyacrylat-, Polymethacrylat- oder N-Vinyl-heterocyclische Sequenzen und/oder Sequenzen aus Gemischen von Polyacrylat-, Polymethacrylat- oder N-Vinyl-Heterocyclen darstellt,
C) Mineralöl und
D) mindestens einen Glycerinester, der von einer ungesättigten Carbonsäure mit 8 bis 30 Kohlenstoffatomen abgeleitet ist.

2. Polymerdispersion nach Anspruch 1, **dadurch gekennzeichnet, dass** der Anteil der Komponente A) mindestens 30 Gew.-% umfasst.

3. Polymerdispersion nach einem oder mehreren der vorhergehenden Ansprüche, **dadurch gekennzeichnet, dass** das Gewichtsverhältnis der Blöcke A zu den Blöcken X im Bereich von 20:1 bis 1:20 liegt.

4. Polymerdispersion nach mindestens einem der vorhergehenden Ansprüche, **dadurch gekennzeichnet, dass** die Komponente B) durch Pfropfcopolymerisation einer Monomerzusammensetzung umfassend (Meth)acrylate auf Polyolefinen gemäß Komponente A) erhältlich ist.

5. Polymerdispersion nach Anspruch 4, **dadurch gekennzeichnet, dass** eine Monomerzusammensetzung eingesetzt wird, aufweisend ein oder mehrere (Meth)acrylate der Formel (I) 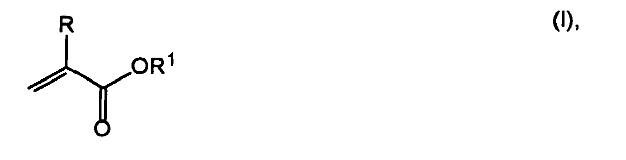 worin R Wasserstoff oder Methyl und R¹ Wasserstoff, einen linearen oder verzweigten Alkylrest mit 1 bis 40 Kohlenstoffatomen bedeuten,
und/oder ein oder mehrere (Meth)acrylate der Formel (I) 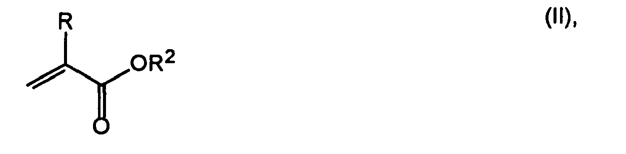 worin R Wasserstoff oder Methyl und R² einen mit einer OH-Gruppe substituierten Alkylrest mit 2 bis 20 Kohlenstoffatomen oder einen alkoxylierten Rest der Formel (III) 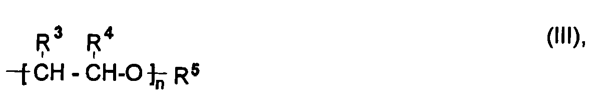 worin R³ und R⁴ unabhängig für Wasserstoff oder Methyl, R⁵ Wasserstoff oder einen Alkylrest mit 1 bis 40 Kohlenstoffatomen und n eine ganze Zahl von 1 bis 90 steht, bedeuten,
und/oder ein oder mehrere (Meth)acrylate der Formel (IV) 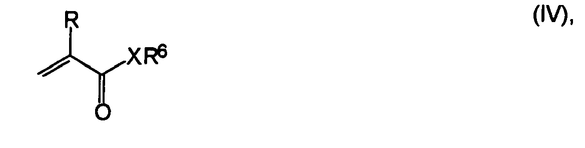 worin R Wasserstoff oder Methyl, X Sauerstoff oder eine Aminogruppe der Formel -NH- oder -NR⁷-, worin R⁷ für einen Alkylrest mit 1 bis 40 Kohlenstoffatomen steht, und R⁸ einen mit mindestens einer -NR⁸R⁹-Gruppe substituierten linearen oder verzweigten Alkylrest mit 2 bis 20, vorzugsweise 2 bis 6 Kohlenstoffatomen bedeuten, wobei R⁸ und R⁹ unabhängig von einander für Wasserstoff, einen Alkylrest mit 1 bis 20, vorzugsweise 1 bis 6 Kohlenstoffatome stehen oder worin R⁸ und R⁹ unter Einbeziehung des Stickstoffatoms und gegebenenfalls eines weiteren Stickstoff oder Sauerstoffatoms einen 5- oder 6-gliederigen Ring bilden, der gegebenenfalls mit C₁-C₈-Alkyl substituiert sein kann.

6. Polymerdispersion nach Anspruch 4 oder 5, **dadurch gekennzeichnet, dass** bei der Pfropfreaktion eine Monomerzusammensetzung eingesetzt wird, die dispergierende Monomere umfasst.

7. Polymerdispersion nach einem oder mehreren der vorhergehenden Ansprüche, **dadurch gekennzeichnet, dass** die Polymer-Dispersion bis zu 30 Gew.-% Komponente B) umfasst.

8. Polymerdispersion nach einem oder mehreren der vorhergehenden Ansprüche, **dadurch gekennzeichnet, dass** die Polymerdispersion 2 bis 40 Gew.-% an Komponente C) umfasst.

9. Polymerdispersion nach einem oder mehreren der vorhergehenden Ansprüche, **dadurch gekennzeichnet, dass** die Polymerdispersion gemäß Komponente D) mindestens einen Glycerinester umfasst, der mindestens zwei Gruppen aufweist, die von Carbonsäuren mit 12 bis 24 Kohlenstoffatomen abgeleitet sind.

10. Polymerdispersion nach einem oder mehreren der vorhergehenden Ansprüche, **dadurch gekennzeichnet, dass** die Komponente D) mindestens einen Glycerinester gemäß der folgenden Formel (V) umfasst, 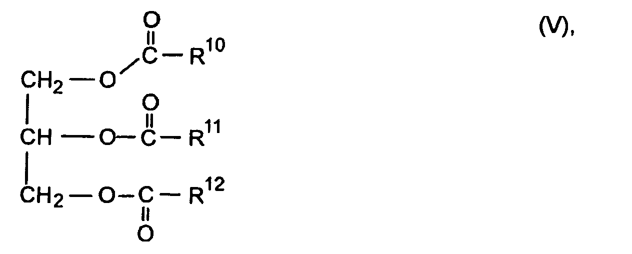 worin die Reste R¹⁰, R¹¹ und R¹² unabhängig einen Kohlenwasserstoffrest mit 7 bis 29 Kohlenstoffatomen bedeuten und mindestens einer der Reste R¹⁰, R¹¹ und R¹² mindestens eine Doppelbindung umfasst.

11. Polymerdispersion nach einem oder mehreren der vorhergehenden Ansprüche, **dadurch gekennzeichnet, dass** der Anteil an Resten, die von ungesättigten Carbonsäuren mit 8 bis 30 Kohlenstoffatomen abgeleitet sind, mindestens 60 Gew.-%, bezogen auf das Gesamtgewicht der Säuren, von denen der Glycerinester abgeleitet ist, beträgt.

12. Polymerdispersion nach Anspruch 11, **dadurch gekennzeichnet, dass** der Anteil an Resten, die von ungesättigten Carbonsäuren mit 12 bis 24 Kohlenstoffatomen abgeleitet sind, mindestens 80 Gew.-%, bezogen auf das Gesamtgewicht der Säuren, von denen der Glycerinester abgeleitet ist, beträgt.

13. Polymerdispersion nach mindestens einem der vorhergehenden Ansprüche, **dadurch gekennzeichnet, dass** der Anteil der gesättigten Fettsäuren höchstens 30 Gew.-% beträgt, bezogen auf das Gesamtgewicht der Säuren, von denen der Glycerinester abgeleitet ist.

14. Polymerdispersion nach Anspruch 13, **dadurch gekennzeichnet, dass** der Anteil der gesättigten Fettsäuren höchstens 10 Gew.-% beträgt, bezogen auf das Gesamtgewicht der Säuren, von denen der Glycerinester abgeleitet ist.

15. Polymerdispersion nach mindestens einem der vorhergehenden Ansprüche, **dadurch gekennzeichnet, dass** der Glycerinester einen Rest umfasst, der von Palmitolsäure, Ölsäure, Elaidinsäure,
Vaccensäure, Icosensäure, Cetoleinsäure, Nervonsäure, Erucasäure, Petroselinsäure und/oder Ricinolsäure abgeleitet ist.

16. Polymerdispersion nach mindestens einem der vorhergehenden Ansprüche, **dadurch gekennzeichnet, dass** der Glycerinester einen Rest umfasst, der von Linolsäure, Linolensäure und/oder Elaeostearinsäure abgeleitet ist.

17. Polymerdispersion nach mindestens einem der vorhergehenden Ansprüche, **dadurch gekennzeichnet, dass** der Glycerinester mindestens 10 Gew.-% Ölsäure und mindestens 20 Gew.-% Linolsäure umfasst, bezogen auf das Gesamtgewicht der Säuren, von denen der Glycerinester abgeleitet ist.

18. Polymerdispersion nach mindestens einem der vorhergehenden Ansprüche, **dadurch gekennzeichnet, dass** die Polymerdispersion gemäß Komponente D) mindestens ein Pflanzenöl umfasst.

19. Polymerdispersion nach Anspruch 18, **dadurch gekennzeichnet, dass** das Pflanzenöl aus Rapsöl, Korianderöl, Sojaöl, Baumwollsamenöl, Sonnenblumenöl, Ricinusöl, Olivenöl, Erdnussöl, Maisöl, Mandelöl, Palmkernöl, Kokosnussöl, Senfsamenöl ausgewählt ist.

20. Polymerdispersion nach mindestens einem der vorhergehenden Ansprüche, **dadurch gekennzeichnet, dass** der Glycerinester gemäß Komponente D) einen Schmelzpunkt aufweist, der kleiner oder gleich 0°C beträgt.

21. Polymerdispersion nach mindestens einem der vorhergehenden Ansprüche, **dadurch gekennzeichnet, dass** der Glycerinester gemäß Komponente D) einen Trübungspunkt aufweist, der kleiner oder gleich 5°C ist.

22. Polymerdispersion nach mindestens einem der vorhergehenden Ansprüche, **dadurch gekennzeichnet, dass** der Glycerinester gemäß Komponente D) eine Viskosität aufweist, die kleiner oder gleich 40 cSt ist, wobei die Viskosität bei 40°C gemäß ASTM D 445 bestimmt werden kann.

23. Polymerdispersion nach mindestens einem der vorhergehenden Ansprüche, **dadurch gekennzeichnet, dass** die Polymerdispersion 30 bis 70 Gew.-% Glycerinester gemäß Komponente D), bezogen auf das Gesamtgewicht der Dispersion, umfasst.

24. Polymerdispersion nach einem oder mehreren der vorhergehenden Ansprüche, **dadurch gekennzeichnet, dass** das Gewichtsverhältnis von Komponente C) zu Komponente D) im Bereich von 1:2 bis 1:10 liegt.

25. Polymerdispersion nach einem oder mehreren der vorhergehenden Ansprüche, **dadurch gekennzeichnet, dass** die Polymerdispersion Stabilisatoren und/oder Antioxidantien enthält.

26. Polymerdispersion nach Anspruch 25, **dadurch gekennzeichnet, dass** die Antioxidantien ausgewählt sind aus Hydrochinon, Hydrochinonmonomethyl-ether, Phenothiazin und sterisch gehinderten Phenolen.

27. Polymerdispersion nach Anspruch 25 oder 26, **dadurch gekennzeichnet, dass** die Polymerdispersion höchstens 2 Gew.-% Stabilisatoren und/oder Antioxidantien enthält, bezogen auf das Gesamtgewicht der Polymerdispersion.

28. Polymerdispersion nach einem oder mehreren der vorhergehenden Ansprüche, **dadurch gekennzeichnet, dass** die Polymerdispersion eine Verbindung umfasst, die eine Dielektrizitätskonstante größer oder gleich 9 aufweist.

29. Polymerdispersion nach Anspruch 28, **dadurch gekennzeichnet, dass** die Verbindung mit einer Dielektrizitätskonstante größer oder gleich 9 ausgewählt ist aus Wasser, Ethylenglykol, Polyethylenglykol und/oder Alkohol.

30. Verfahren zur Herstellung von Polymerdispersionen gemäß den Ansprüchen 1 bis 27, **dadurch gekennzeichnet, dass** man mindestens ein Polyolefin in einer Lösung, die mindestens eine Dispergierkomponente gemäß Komponente B), Mineralöl gemäß Komponente C) und mindestens einen Glycerinester gemäß Komponente D) umfasst, unter Anwendung von Scherkräften dispergiert.

31. Verfahren nach Anspruch 30, **dadurch gekennzeichnet, dass** die Komponente A) als Feststoff der Lösung zugegeben wird.

32. Verfahren nach Anspruch 30 oder 31, **dadurch gekennzeichnet, dass** das Dispergieren bei einer Temperatur im Bereich von 60 bis 120°C erfolgt.

33. Verfahren nach Anspruch 30 oder 31, **dadurch gekennzeichnet, dass** das Dispergieren über eine Zeitspanne im Bereich von 1 bis 6 h erfolgt.

34. Verfahren nach mindestens einem der Ansprüche 30 bis 33, **dadurch gekennzeichnet, dass** das Dispergieren mit einem Leistungseintrag von höchstens 1 kW/m³, bezogen auf das Dispergieren von 1 kg Polyolefin in einer Lösung, die 0,5 kg Dispergierkomponente, 0,1 kg Mineralöl und 1 kg Glycerinester enthält, erfolgt.

35. Verwendung einer Polymerdispersion gemäß einem der Ansprüche 1 bis 29 als Zusatzstoff für Schmierölformulierungen.

## Claims

1. Polymer dispersion comprising
A) at least one dispersed polyolefin comprising one or more olefin copolymers, hydrogenated polyisoprene, hydrogenated copolymers of butadiene/- isoprene, or hydrogenated copolymers of butadiene/isoprene and styrene,
B) at least one dispersing component which is a copolymer which comprises one or more A blocks and one or more X blocks, said A block comprising olefin copolymer sequences, hydrogenated polyisoprene sequences, hydrogenated copolymers of butadiene/isoprene or hydrogenated copolymers of butadiene/isoprene and styrene, and
said X block comprising polyacrylate, polymethacrylate or N-vinylheterocyclic sequences and/or sequences of mixtures of polyacrylate, polymethacrylate or N-vinylheterocycles,
C) mineral oil and
D) at least one glyceryl ester derived from an unsaturated carboxylic acid having 8 to 30 carbon atoms.

2. Polymer dispersion according to Claim 1, **characterized in that** the proportion of component A) comprises at least 30% by weight.

3. Polymer dispersion according to one or more of the preceding claims, **characterized in that** the weight ratio of the A blocks to the X blocks is in the range from 20:1 to 1:20.

4. Polymer dispersion according to at least one of the preceding claims, **characterized in that** component B) is obtainable by graft copolymerization of a monomer composition comprising (meth)acrylates onto polyolefins according to component A).

5. Polymer dispersion according to Claim 4, **characterized in that** the monomer composition used comprises one or more (meth)acrylates of the formula (I) 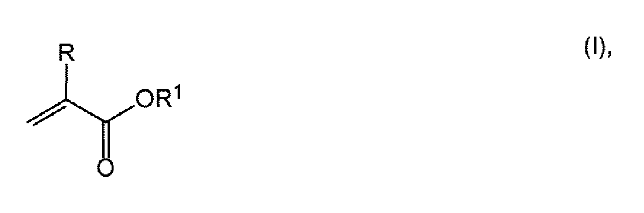 in which R is hydrogen or methyl and R¹ is hydrogen, a linear or branched alkyl radical having 1 to 40 carbon atoms,
and/or one or more (meth)acrylates of the formula (II) 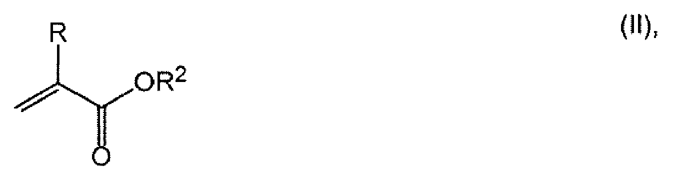 in which R is hydrogen or methyl and R² is an alkyl radical which has 2 to 20 carbon atoms and is substituted by an OH group, or an alkoxylated radical of the formula (III) 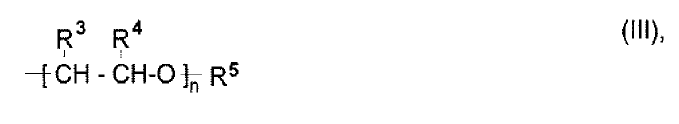 in which R³ and R⁴ are each independently hydrogen or methyl, R⁵ is hydrogen or an alkyl radical having 1 to 40 carbon atoms and n is an integer from 1 to 90,
and/or one or more (meth)acrylates of the formula (IV) 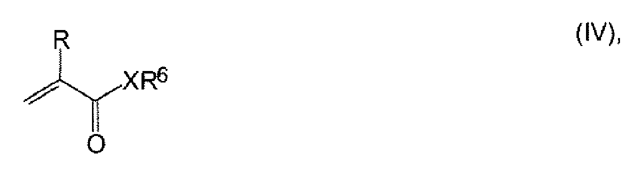 in which R is hydrogen or methyl, X is oxygen or an amino group of the formula -NH- or -NR⁷- in which R⁷ is an alkyl radical having 1 to 40 carbon atoms, and R⁶ is a linear or branched alkyl radical which has 2 to 20, preferably 2 to 6, carbon atoms and is substituted by at least one -NR⁸R⁹- group where R⁸ and R⁹ are each independently hydrogen, an alkyl radical having 1 to 20, preferably 1 to 6, carbon atoms or in which R⁸ and R⁹, including the nitrogen atom and optionally a further nitrogen or oxygen atom, form a 5- or 6-membered ring which may optionally be substituted by C₁-C₆-alkyl.

6. Polymer dispersion according to Claim 4 or 5, **characterized in that** the monomer composition used in the graft reaction comprises dispersing monomers.

7. Polymer dispersion according to one or more of the preceding claims, **characterized in that** the polymer dispersion comprises up to 30% by weight of component C).

8. Polymer dispersion according to one or more of the preceding claims, **characterized in that** the polymer dispersion comprises 2 to 40% by weight of component C).

9. Polymer dispersion according to one or more of the preceding claims, **characterized in that** the polymer dispersion comprises, as component D), at least one glyceryl ester which has at least two groups derived from carboxylic acids having 12 to 24 carbon atoms.

10. Polymer dispersion according to one or more of the preceding claims, **characterized in that** component D) comprises at least one glyceryl ester according to the following formula (V) 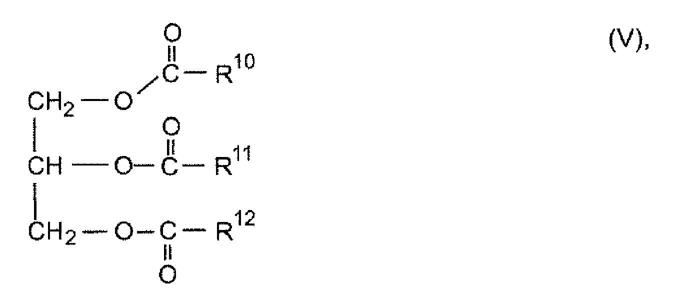 in which the R¹⁰, R¹¹ and R¹² radicals are each independently a hydrocarbon radical having 7 to 29 carbon atoms, and at least one of the R¹⁰, R¹¹ and R¹² radicals comprises at least one double bond.

11. Polymer dispersion according to one or more of the preceding claims, **characterized in that** the proportion of radicals derived from unsaturated carboxylic acids having 8 to 30 carbon atoms is at least 60% by weight, based on the total weight of the acids from which the glyceryl ester is derived.

12. Polymer dispersion according to Claim 11, **characterized in that** the proportion of radicals derived from unsaturated carboxylic acids having 12 to 24 carbon atoms is at least 80% by weight, based on the total weight of the acids from which the glyceryl ester is derived.

13. Polymer dispersion according to at least one of the preceding claims, **characterized in that** the proportion of saturated fatty acids is at most 30% by weight, based on the total weight of the acids from which the glyceryl ester is derived.

14. Polymer dispersion according to Claim 13, **characterized in that** the proportion of saturated fatty acids is at most 10% by weight, based on the total weight of the acids from which the glyceryl ester is derived.

15. Polymer dispersion according to at least one of the preceding claims, **characterized in that** the glyceryl ester comprises a radical derived from palmitoleic acid, oleic acid, elaidic acid, vaccenic acid, eicosenoic acid, cetoleic acid, nervonic acid, erucic acid, petroselic acid and/or ricinoleic acid.

16. Polymer dispersion according to at least one of the preceding claims, **characterized in that** the glyceryl ester comprises a radical derived from linoleic acid, linolenic acid and/or eleostearic acid.

17. Polymer dispersion according to at least one of the preceding claims, **characterized in that** the glyceryl ester comprises at least 10% by weight of oleic acid and at least 20% by weight of linoleic acid, based on the total weight of the acids from which the glyceryl ester is derived.

18. Polymer dispersion according to at least one of the preceding claims, **characterized in that** the polymer dispersion comprises, as component D), at least one vegetable oil.

19. Polymer dispersion according to Claim 18, **characterized in that** the vegetable oil is selected from rapeseed oil, coriander oil, soybean oil, cottonseed oil, sunflower oil, castor oil, olive oil, peanut oil, corn oil, almond oil, palm kernel oil, coconut oil, mustardseed oil.

20. Polymer dispersion according to at least one of the preceding claims, **characterized in that** the glyceryl ester according to component D) has a melting point less than or equal to 0°C.

21. Polymer dispersion according to at least one of the preceding claims, **characterized in that** the glyceryl ester according to component D) has a cloud point less than or equal to 5°C.

22. Polymer dispersion according to at least one of the preceding claims, **characterized in that** the glyceryl ester according to component D) has a viscosity less than or equal to 40 cSt, the viscosity being determinable at 40°C to ASTM D 445.

23. Polymer dispersion according to at least one of the preceding claims, **characterized in that** the polymer dispersion comprises 30 to 70% by weight of glyceryl esters according to component D), based on the total weight of the dispersion.

24. Polymer dispersion according to one or more of the preceding claims, **characterized in that** the weight ratio of component C) to component D) is in the range from 1:2 to 1:10.

25. Polymer dispersion according to one or more of the preceding claims, **characterized in that** the polymer dispersion comprises stabilizers and/or antioxidants.

26. Polymer dispersion according to Claim 25, **characterized in that** the antioxidants are selected from hydroquinone, hydroquinone monomethyl ether, phenothiazine and sterically hindered phenols.

27. Polymer dispersion according to Claim 25 or 26, **characterized in that** the polymer dispersion contains at most 2% by weight of stabilizers and/or antioxidants, based on the total weight of the polymer dispersion.

28. Polymer dispersion according to one or more of the preceding claims, **characterized in that** the polymer dispersion comprises a compound which has a dielectric constant greater than or equal to 9.

29. Polymer dispersion according to Claim 28, **characterized in that** the compound having a dielectric constant greater than or equal to 9 is selected from water, ethylene glycol, polyethylene glycol and/or alcohol.

30. Process for producing polymer dispersions according to Claims 1 to 27, **characterized in that** at least one polyolefin is dispersed in a solution which comprises at least one dispersing component according to component B), mineral oil according to component C) and at least one glyceryl ester according to component D), employing shear forces.

31. Process according to Claim 30, **characterized in that** component A) is added to the solution as a solid.

32. Process according to Claim 30 or 31, **characterized in that** the dispersing is effected at a temperature in the range from 60 to 120°C.

33. Process according to Claim 30 or 31, **characterized in that** the dispersing is effected over a period in the range from 1 to 6 h.

34. Process according to at least one of Claims 30 to 33, **characterized in that** the dispersing is effected with a power input of at most 1 kW/m³, based on the dispersing of 1 kg of polyolefin in a solution which contains 0.5 kg of dispersing component, 0.1 kg of mineral oil and 1 kg of glyceryl ester.

35. Use of a polymer dispersion according to any one of Claims 1 to 29 as an additive for lubricant oil formulations.

## Revendications

1. Dispersion polymère, comprenant :
A) au moins une polyoléfine dispersée, comprenant un ou plusieurs copolymères d'oléfine, polyisoprènes hydrogénés, copolymères hydrogénés de butadiène/isoprène ou copolymères hydrogénés de butadiène/isoprène et de styrène,
B) au moins un composant de dispersion, qui consiste en un copolymère qui comprend une ou plusieurs séquences A et une ou plusieurs séquences X, la séquence A consistant en des séquences de copolymère d'oléfine, des séquences de polyisoprène hydrogéné, des copolymères hydrogénés de butadiène/isoprène ou des copolymères hydrogénés de butadiène/isoprène et de styrène, et la séquence X consistant en des séquences de polyacrylate, de polyméthacrylate ou N-vinyl-hétérocycliques et/ou en des séquences de mélanges de polyacrylates, de polyméthacrylates ou de N-vinyl-hétérocycles,
C) une huile minérale et
D) au moins un ester de glycérine, qui est dérivé d'un acide carboxylique insaturé contenant 8 à 30 atomes de carbone.

2. Dispersion polymère selon la revendication 1, **caractérisée en ce que** la proportion du composant A) est d'au moins 30 % en poids.

3. Dispersion polymère selon une ou plusieurs des revendications précédentes, **caractérisée en ce que** le rapport en poids entre les séquences A et les séquences X se situe dans la plage allant de 20:1 à 1:20.

4. Dispersion polymère selon au moins l'une quelconque des revendications précédentes, **caractérisée en ce que** le composant B) peut être obtenu par copolymérisation-greffage d'une composition de monomères comprenant des (méth)acrylates sur des polyoléfines selon le composant A).

5. Dispersion polymère selon la revendication 4, **caractérisée en ce qu'**une composition de monomères est utilisée, comprenant un ou plusieurs (méth)acrylates de formule (I) 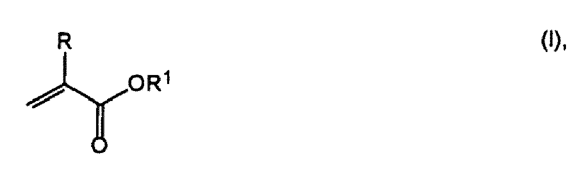 dans laquelle R signifie hydrogène ou méthyle et R¹ signifie hydrogène, un radical alkyle linéaire ou ramifié contenant 1 à 40 atomes de carbone,
et/ou un ou plusieurs (méth)acrylates de formule (II) 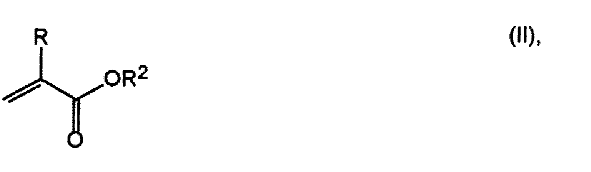 dans laquelle R signifie hydrogène ou méthyle et R² signifie un radical alkyle substitué avec un groupe OH contenant 2 à 20 atomes de carbone ou un radical alcoxylé de formule (III) 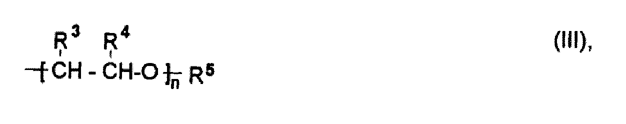 dans laquelle R³ et R⁴ signifient indépendamment hydrogène ou méthyle, R⁵ signifie hydrogène ou un radical alkyle contenant 1 à 40 atomes de carbone et n représente un nombre entier de 1 à 90,
et/ou un ou plusieurs (méth)acrylates de formule (IV) 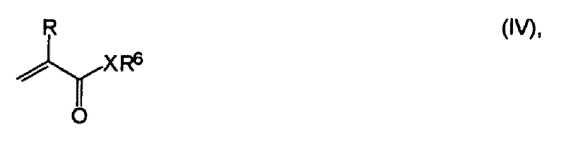 dans laquelle R signifie hydrogène ou méthyle, X signifie hydrogène ou un groupe amino de formule -NH- ou -NR⁷-, R⁷ représentant un radical alkyle contenant 1 à 40 atomes de carbone, et R⁶ signifie un radical alkyle linéaire ou ramifié, contenant 2 à 20, de préférence 2 à 6, atomes de carbone, substitué avec au moins un groupe -NR⁸R⁹-, R⁸ et R⁹ représentant indépendamment l'un de l'autre l'hydrogène, un radical alkyle contenant 1 à 20, de préférence 1 à 6, atomes de carbone, ou R⁸ et R⁹ formant avec l'atome d'azote et éventuellement un autre atome d'azote ou d'oxygène un cycle à 5 ou 6 éléments, qui peut éventuellement être substitué avec alkyle en C₁-C₈.

6. Dispersion polymère selon la revendication 4 ou 5, **caractérisée en ce qu'**une composition de monomères qui comprend des monomères de dispersion est utilisée lors de la réaction de greffage.

7. Dispersion polymère selon une ou plusieurs des revendications précédentes, **caractérisée en ce que** la dispersion polymère comprend jusqu'à 30 % en poids du composant B).

8. Dispersion polymère selon une ou plusieurs des revendications précédentes, **caractérisée en ce que** la dispersion polymère comprend 2 à 40 % en poids du composant C).

9. Dispersion polymère selon une ou plusieurs des revendications précédentes, **caractérisée en ce que** la dispersion polymère comprend selon le composant D) au moins un ester de glycérine, qui comprend au moins deux groupes dérivés d'acides carboxyliques contenant 12 à 24 atomes de carbone.

10. Dispersion polymère selon une ou plusieurs des revendications précédentes, **caractérisée en ce que** le composant D) comprend au moins un ester de glycérine de la formule (V) suivante : 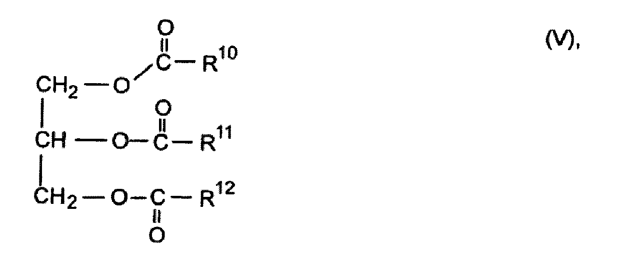 dans laquelle les radicaux R¹⁰, R¹¹ et R¹² signifient indépendamment un radical hydrocarboné contenant 7 à 29 atomes de carbone et au moins un des radicaux R¹⁰, R¹¹ et R¹² comprend au moins une double liaison.

11. Dispersion polymère selon une ou plusieurs des revendications précédentes, **caractérisée en ce que** la proportion de radicaux dérivés d'acides carboxyliques insaturés contenant 8 à 30 atomes de carbone est d'au moins 60 % en poids, par rapport au poids total des acides desquels l'ester de glycérine est dérivé.

12. Dispersion polymère selon la revendication 11, **caractérisée en ce que** la proportion de radicaux dérivés d'acides carboxyliques insaturés contenant 12 à 24 atomes de carbone est d'au moins 80 % en poids, par rapport au poids total des acides desquels l'ester de glycérine est dérivé.

13. Dispersion polymère selon au moins l'une quelconque des revendications précédentes, **caractérisée en ce que** la proportion d'acides gras saturés est d'au plus 30 % en poids, par rapport au poids total des acides desquels l'ester de glycérine est dérivé.

14. Dispersion polymère selon la revendication 13, **caractérisée en ce que** la proportion d'acides gras saturés est d'au plus 10 % en poids, par rapport au poids total des acides desquels l'ester de glycérine est dérivé.

15. Dispersion polymère selon au moins l'une quelconque des revendications précédentes, **caractérisée en ce que** l'ester de glycérine comprend un radical dérivé d'acide palmitoléique, d'acide oléique, d'acide élaïdique, d'acide vaccénique, d'acide icosénique, d'acide cétoléique, d'acide nervonique, d'acide érucique, d'acide pétrosélinique et/ou d'acide ricinoléique.

16. Dispersion polymère selon au moins l'une quelconque des revendications précédentes, **caractérisée en ce que** l'ester de glycérine comprend un radical dérivé d'acide linoléique, d'acide linolénique et/ou d'acide élaéostéarique.

17. Dispersion polymère selon au moins l'une quelconque des revendications précédentes, **caractérisée en ce que** l'ester de glycérine comprend au moins 10 % en poids d'acide oléique et au moins 20 % en poids d'acide linoléique, par rapport au poids total des acides desquels l'ester de glycérine est dérivé.

18. Dispersion polymère selon au moins l'une quelconque des revendications précédentes, **caractérisée en ce que** la dispersion polymère comprend selon le composant D) au moins une huile végétale.

19. Dispersion polymère selon la revendication 18, **caractérisée en ce que** l'huile végétale est choisie parmi l'huile de colza, l'huile de coriandre, l'huile de soja, l'huile de coton, l'huile de tournesol, l'huile de ricin, l'huile d'olive, l'huile d'arachide, l'huile de maïs, l'huile d'amande, l'huile de palme, l'huile de coco, l'huile de moutarde.

20. Dispersion polymère selon au moins l'une quelconque des revendications précédentes, **caractérisée en ce que** l'ester de glycérine selon le composant D) présente un point de fusion inférieur ou égal à 0 °C.

21. Dispersion polymère selon au moins l'une quelconque des revendications précédentes, **caractérisée en ce que** l'ester de glycérine selon le composant D) présente un point de trouble inférieur ou égal à 5 °C.

22. Dispersion polymère selon au moins l'une quelconque des revendications précédentes, **caractérisée en ce que** l'ester de glycérine selon le composant D) présente une viscosité inférieure ou égale à 40 cSt, la viscosité pouvant être déterminée à 40°C selon ASTM D 445.

23. Dispersion polymère selon au moins l'une quelconque des revendications précédentes, **caractérisée en ce que** la dispersion polymère comprend 30 à 70 % en poids d'ester de glycérine selon le composant D), par rapport au poids total de la dispersion.

24. Dispersion polymère selon une ou plusieurs des revendications précédentes, **caractérisée en ce que** le rapport en poids entre le composant C) et le composant D) se situe dans la plage allant de 1:2 à 1:10.

25. Dispersion polymère selon une ou plusieurs des revendications précédentes, **caractérisée en ce que** la dispersion polymère contient des stabilisateurs et/ou des antioxydants.

26. Dispersion polymère selon la revendication 25, **caractérisée en ce que** les antioxydants sont choisis parmi l'hydroquinone, l'éther monométhylique d'hydroquinone, la phénothiazine et les phénols à encombrement stérique.

27. Dispersion polymère selon la revendication 25 ou 26, **caractérisée en ce que** la dispersion polymère contient au plus 2 % en poids de stabilisateurs et/ou d'antioxydants, par rapport au poids total de la dispersion polymère.

28. Dispersion polymère selon une ou plusieurs des revendications précédentes, **caractérisée en ce que** la dispersion polymère comprend un composé qui présente une constante diélectrique supérieure ou égale à 9.

29. Dispersion polymère selon la revendication 28, **caractérisée en ce que** le composé présentant une constante diélectrique supérieure ou égale à 9 est choisi parmi l'eau, l'éthylène glycol, le polyéthylène glycol et/ou un alcool.

30. Procédé de fabrication de dispersions polymères selon les revendications 1 à 27, **caractérisé en ce qu'**au moins une polyoléfine est dispersée dans une solution, qui comprend au moins un composant de dispersion selon le composant B), une huile minérale selon le composant C) et au moins un ester de glycérine selon le composant D), en utilisant des forces de cisaillement.

31. Procédé selon la revendication 30, **caractérisé en ce que** le composant A) est ajouté à la solution sous forme solide.

32. Procédé selon la revendication 30 ou 31, **caractérisé en ce que** la dispersion a lieu à une température dans la plage allant de 60 à 120 °C.

33. Procédé selon la revendication 30 ou 31, **caractérisé en ce que** la dispersion a lieu en une durée dans la plage allant de 1 à 6 h.

34. Procédé selon au moins l'une quelconque des revendications 30 à 33, **caractérisé en ce que** la dispersion a lieu avec un apport de puissance d'au plus 1 kW/m³ pour la dispersion de 1 kg de polyoléfine dans une solution contenant 0,5 kg de composant de dispersion, 0,1 kg d'huile minérale et 1 kg d'ester de glycérine.

35. Utilisation d'une dispersion polymère selon l'une quelconque des revendications 1 à 29 en tant qu'additif pour des formulations d'huile lubrifiante.
